# FASCICULE DE BREVET EUROPEEN

(11) **EP 1 946 991 B1**
(45) Date de publication et mention de la délivrance du brevet: **01.02.2012**
(21) Numéro de dépôt: 07120949.8
(22) Date de dépôt: 19.11.2007
(51) Int. Cl.: B62B 7/08

(54) **Châssis pliant pour voiture d'enfant**
Zusammenklappbares Fahrgestell für Kinderwagen
Folding chassis for children pushchair

(30) Priorité: 17.01.2007 ES 200700092 U
(43) Date de publication de la demande: 23.07.2008
(73) Titulaire: Bebecar-utilidades para criança S.A., 4509-903 Caldas de s.Jorge (PT)
(72) Inventeur: Santos, Emanuel, 4509-903 Caldas de S. Jorge (PT); Ferreira, Valdemar, 4520-615 S. João de Ver (PT)
(74) Mandataire: Besnard, Christophe Laurent

(56) Documents cités:
- EP-A1- 0 474 537
- US-A- 5 938 230

## Description

Le domaine de l'invention est celui de la puériculture et l'invention concerne un châssis pliant pour voiture d'enfant et une voiture d'enfant équipée d'un tel châssis. L'invention se destine à tout type de voiture d'enfant : poussette, landau

Plus particulièrement, l'invention concerne un type de châssis pliant selon le préambule de la revendication 1. :

Ce type de châssis, connu, est dit à "pliage télescopique" (ou à "fermeture télescopique") par opposition aux châssis dits à "pliage cassé".

Dans un châssis à pliage cassé, les bras poussoirs se trouvent, en position dépliée, sensiblement dans le prolongement des montants avant et, lors du pliage, basculent par rapport a ces derniers. Ce basculement des bras poussoirs se fait vers le bas ou vers le haut de sorte que l'extrémité supérieure des bras poussoirs se rapproche des roues arrière ou des roues avant du châssis.

Dans un châssis à pliage télescopique, en position dépliée (ou position d'utilisation, ou encore position ouverte), chaque bras poussoir se trouve sensiblement dans le prolongement du montant avant correspondant, et en position repliée (ou position de rangement, ou encore position fermée), le bras poussoir et le montant avant sont disposés sensiblement côte à côte. Généralement, un châssis à pliage télescopique se maintient debout en position repliée (en appui sur les roues avant et sur les bras poussoirs).

L'invention concerne un châssis à pliage télescopique.

Pour certaines configurations de châssis à pliage télescopique et, notamment, lorsque les roues avant et/ou arrière sont de grande dimension, il est fréquent que les roues arrière viennent buter contre les roues avant lors du pliage du châssis et limitent, ainsi, ce pliage. Dans ce cas, le châssis replié est peu compact dans le sens de son épaisseur, ce qui constitue un inconvénient pour ranger le châssis, par exemple dans un coffre de voiture.

Une solution connue pour que les roues arrière ne viennent pas buter contre les roues avant lors du pliage, consiste à prévoir un écartement des roues arrière plus important que celui des roues avant, de sorte que les roues arrière encadrent les roues avant en position repliée. Toutefois, cette solution est jugée insatisfaisante car, en raison de l'écartement important des roues arrière, l'encombrement du châssis dans le sens de la largeur est important, ce qui constitue un inconvénient lors de l'utilisation ou du rangement du châssis.

Le document US 5 938 230 décrit un châssis selon le préambule de la revendication 1.

L'invention a pour but de proposer une autre solution permettant de s'assurer que les roues arrière ne viennent pas buter contre les roues avant lors du pliage du châssis.

Ainsi, l'invention a pour objet un châssis à pliage télescopique selon la revendication 1.

Lorsqu'on plie le châssis de l'invention, le montant arrière pivote par rapport au montant avant en se rapprochant de celui-ci, et la barre de liaison pivote par rapport au montant arrière de sorte que ladite portion d'extrémité s'éloigne de l'extrémité inférieure du montant arrière en entraînant avec elle, par l'intermédiaire de la pièce de traction, le système de support et la roue arrière montée sur ce dernier.

Ainsi, lorsqu'on plie le châssis de l'invention, le système de support et la roue arrière remontent le long du montant arrière de sorte que la roue arrière passe au dessus de la roue avant correspondante. La roue arrière et la roue avant ne butent donc pas l'une contre l'autre et ne gênent pas le pliage du châssis. En position repliée, l'encombrement du châssis dans le sens de l'épaisseur est donc minimum.

L'invention présente un intérêt particulier lorsque les roues avant et/ou arrière du châssis sont de grande dimension et, par exemple, lorsque ces roues ont un diamètre d'environ 30 cm (i.e. environ 11 pouces) car, sans l'invention, les roues arrière risqueraient de venir buter contre les roues avant lors du pliage.

Toutefois, l'invention peut également être utile lorsque les roues avant et/ou arrière du châssis sont de petite dimension (par exemple, lorsque ces roues ont un diamètre d'environ 160 cm, i.e. environ 6 pouces) car l'invention permet alors de concevoir certaines pièces du châssis avec des dimensions réduites (par rapport aux dimensions usuelles). Typiquement, la longueur des montants avant peut être réduite sans que les roues arrière risquent de venir buter contre les roues avant lors du pliage.

Selon un mode de réalisation, ledit système de support auquel la roue arrière est accouplée, est un système de suspension. Les systèmes de support des roues arrière des voitures d'enfant sont souvent des systèmes de suspension, de manière à amortir les chocs dus aux irrégularités de la route.

Par "pièce de traction", on entend désigner une pièce de liaison qui permet de transmettre une traction entre ladite portion d'extrémité et ledit système de support et qui contribue ainsi à tirer le système de support vers le haut, le long du montant arrière, lors du pliage du châssis. La forme et/ou la structure de la pièce de traction peuvent varier du moment que la pièce assure la fonction mécanique précitée.

Ladite pièce de traction peut également, mais pas nécessairement, permettre de transmettre une poussée entre ladite portion d'extrémité et ledit système de support et, ainsi, contribuer à pousser le système de support vers le bas, le long du montant arrière, lors du dépliage du châssis. Dans ce dernier cas, ladite pièce de traction peut être une entretoise, c'est-à-dire une pièce de liaison destinée à maintenir un écartement constant entre ladite portion d'extrémité et ledit système de support, aussi bien lors du pliage que lors du dépliage du châssis.

A titre d'exemple, ladite pièce de traction peut consister en une tige rigide, c'est-à-dire une tige suffisamment rigide pour travailler en compression et en traction sans se déformer, ou en se déformant très peu.

Selon un mode de réalisation, ledit châssis comprend, en outre, au moins une poignée de guidage coopérant avec lesdits bras poussoirs, cette (ces) poignée(s) servant au guidage de la voiture d'enfant lors de son utilisation.

Selon un mode de réalisation, ladite poignée de guidage est une barre de guidage qui relie les bras poussoirs entre eux et qui est articulée par rapport aux bras poussoirs, de manière à pouvoir être basculée en direction des roues arrière dans la position repliée du châssis. Ceci améliore encore la compacité du châssis en position repliée.

L'invention a également pour objet une voiture d'enfant comprenant un châssis pliant selon l'invention.

L'invention et ses avantages seront mieux compris à la lecture de la description détaillée qui suit, d'un exemple de réalisation de châssis pliant selon l'invention. Cette description fait référence aux figures annexées sur lesquelles:
- la figure 1 représente schématiquement un exemple de châssis pliant selon l'invention, en position dépliée et vu de côté ;
- la figure 2 représente schématiquement le châssis pliant de la figure 1 dans une position intermédiaire entre sa position dépliée et sa position repliée ; et
- la figure 3 représente schématiquement le châssis pliant de la figure 1, en position repliée.

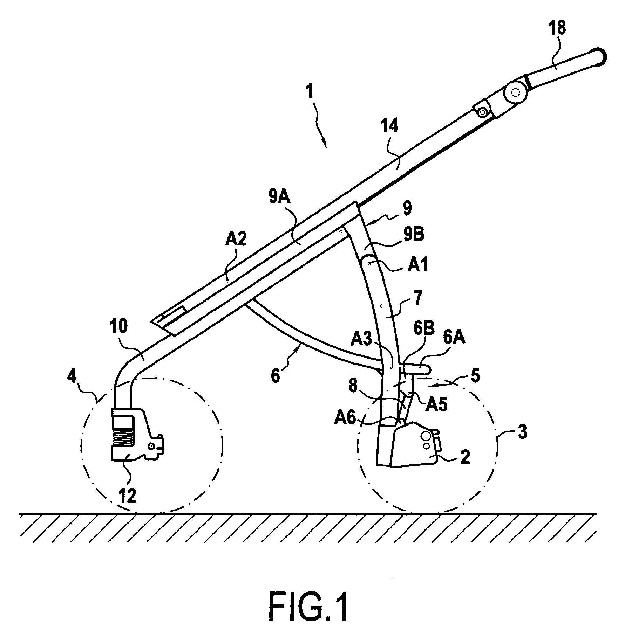

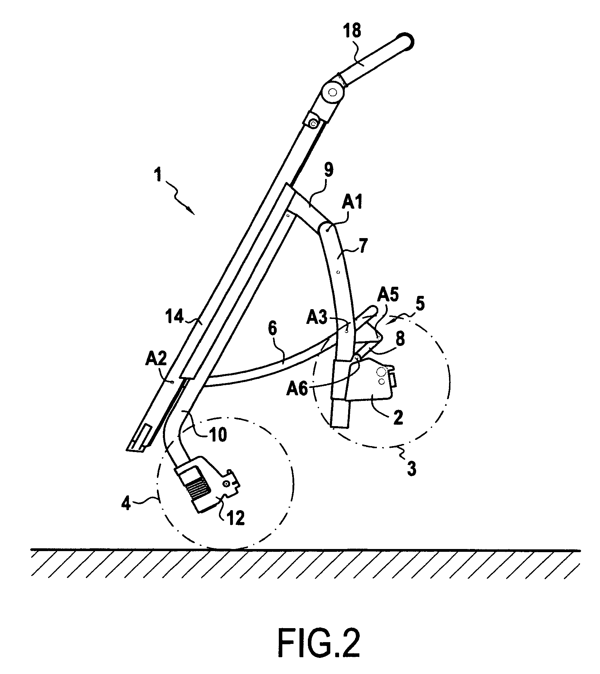

L'exemple de châssis pliant 1 des figures 1 à 3 comprend :
- deux montants avant 10, chaque montant avant 10 portant à son extrémité inférieure une roue avant 4, cette roue avant 4 étant montée sur un système de support 12, lui-même monté sur le montant avant 10 ;
- deux montants arrière 7, chaque montant arrière 7 portant à son extrémité inférieure une roue arrière 3, cette roue arrière étant montée sur un système de support 2, lui-même monté sur le montant arrière 7 ;
- deux bras poussoirs 14 respectivement montés coulissant par rapport aux deux montants avant 10, par l'intermédiaire de deux pièces de jonction 9 ;
- deux systèmes de rétractation mécaniques 5 des roues arrières 3 ; et
- une barre de guidage 18 qui relie les bras poussoirs 14 entre eux.

Les adjectifs "inférieur" et "supérieur" sont utilisés en référence à la position dépliée du châssis 1, représentée sur la figure 1. Par ailleurs, le châssis étant vu de côté sur les figures 1 à 3, on ne voit sur ces figures qu'un seul des deux montants avant 10, qu'un seul des deux montants arrière 7, etc.

Les systèmes de support 2 et 12 sont tous les deux des systèmes de suspension. En outre, chaque système de support 2 pour roue arrière 3 est monté coulissant par rapport au montant arrière 7.

Les roues avant et arrière 3, 4 sont de grandes dimensions et, par exemple, le diamètre de ces roues est environ égal à 30 cm.

L'écartement entre les roues avant 3 est sensiblement identique à l'écartement entre les roues arrière 4, les roues avant 3 et arrière 4 étant alignées lorsque le châssis déplié est vu de face. Ainsi, l'encombrement du châssis 1 dans le sens de sa largeur (i.e. suivant la direction perpendiculaire au plan des figures) est limité.

Chacune des pièces de jonction 9 est fixée à un montant avant 10. Elle présente une forme générale en L avec une première partie 9A qui longe la face supérieure du montant avant 10 et qui est située entre le montant avant 10 et le bras poussoir 14, et une deuxième partie 9B qui coiffe l'extrémité supérieure du montant avant 10 et qui s'étend vers le bas. Ladite première partie 9A sert de glissière au bras poussoir 14.

Chaque montant arrière 7 est articulé par rapport au montant avant 10, par l'intermédiaire de ladite pièce de jonction 9. Plus précisément, chaque montant arrière 7 est monté pivotant autour d'un axe de rotation A1 supporté par la deuxième partie 9B de la pièce de jonction 9.

Chaque barre de liaison 6 est articulée par rapport à un bras poussoir 14 et à un montant arrière 7. Plus précisément, chaque barre de liaison 6 est montée pivotante autour d'un axe de rotation A2 supporté par le bras poussoir 14 et situé dans la partie inférieure de ce dernier, et d'un axe de rotation A3 supporté par le montant arrière 7 et situé dans la partie médiane de ce dernier, à distance de son extrémité inférieure. Ainsi, lorsque le bras poussoir 14 coulisse par rapport au montant avant 10 sur lequel il est monté, il entraîne le montant arrière 7 en rotation par rapport au montant avant 10, par l'intermédiaire de la barre de liaison 6.

Chaque barre de liaison 6 présente une portion d'extrémité 6A s'étendant au-delà du montant arrière. Dans l'exemple représenté, la barre de liaison 6 comprend au voisinage de son extrémité inférieure (i.e. l'extrémité située à droite sur la figure 1) une partie 6B ayant une forme générale de triangle, un sommet dudit triangle étant orienté vers le bas, en direction du système de support 2.

Chaque système de rétractation mécanique 5 de roue arrière 3 comprend une pièce de traction 8. Dans l'exemple, cette pièce de traction est une tige rigide, c'est-à-dire une tige suffisamment rigide pour travailler en compression et en traction sans se déformer, ou en se déformant très peu.

La pièce de traction 8 est articulée par rapport à ladite portion d'extrémité 6A et audit système de support 2. Plus précisément, la pièce de traction 8 est montée pivotante autour d'un axe de rotation A5 supporté au niveau du sommet inférieur de la partie 6B, et autour d'un axe de rotation A6 supporté par le système de support 2, au niveau de la face supérieure et à proximité du montant arrière 7.

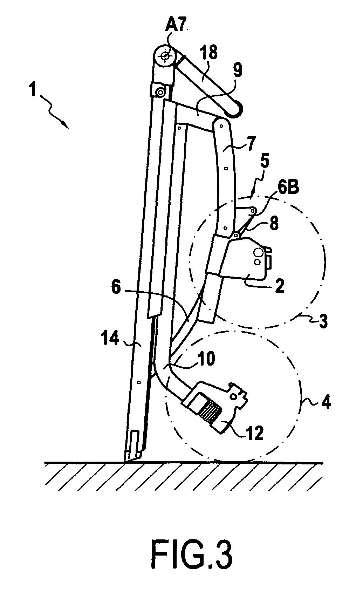

Lors du pliage du châssis, le pivotement du montant arrière 7 par rapport au montant avant 10 entraîne le pivotement vers le haut de la portion d'extrémité 6A et, ainsi, le coulissement vers le haut du système de support 2 le long du montant arrière 7, ce système de support 2 étant tiré vers le haut par l'intermédiaire de la pièce de traction 8. Cette cinématique de pliage est clairement illustrée par les figures 1 à 3 qui représentent le châssis à différents instants du pliage. Le système de rétractation mécanique 5 permet donc, lors du pliage, de faire remonter la roue arrière 3 et de la faire passer au dessus de la roue avant 4, de sorte que les roues avant et arrière ne se touchent pas, comme représenté sur la figure 3. Ainsi, le pliage du châssis 1 est intégral et l'encombrement du châssis replié, dans le sens de l'épaisseur est minimal.

La barre de guidage 18 est articulée par rapport aux bras poussoir 14. Plus précisément, elle est montée pivotante autour le l'axe de rotation A7 supporté par les bras poussoirs 14, au niveau de leurs extrémités supérieures. Pour réduire l'encombrement du châssis, dans le sens de sa longueur, on peut replier la barre de guidage 18, en direction du montant arrière 7, comme représenté sur la figure 3.

Lors du dépliage du châssis, le pivotement du montant arrière 7 par rapport au montant avant 10 entraîne le pivotement vers le bas de la portion d'extrémité 6A et, ainsi, le coulissement vers le bas du système de support 2 le long du montant arrière 7, ce système de support 2 étant poussé vers le bas par l'intermédiaire de la pièce de traction 8. Ainsi, la roue arrière est ramenée vers l'extrémité inférieure du montant arrière 7.

Au final, même lorsque le châssis 1 est équipé de grandes roues 3, 4, il présente des dimensions réduites, aussi bien déplié que replié, grâce au système de rétractation mécanique 5 qui fonctionne simultanément avec le reste du châssis lors du dépliage/pliage de celui-ci.

## Revendications

1. Châssis pliant pour voiture d'enfant comprenant :
- deux montants avant (10), chaque montant avant portant à son extrémité inférieure une roue avant (4) ;
- deux montants arrière (7), chaque montant arrière portant à son extrémité inférieure une roue arrière (3), cette roue arrière étant montée sur un système de support (2), lui-même monté sur le montant arrière, ces deux montants arrière (7) étant respectivement articulés par rapport aux deux montants avant (10) ;
- deux bras poussoirs (14) respectivement montés coulissant par rapport aux deux montants avant (10) ;
- deux barres de liaison (6), chaque barre de liaison étant articulée par rapport à un bras poussoir (14) et à un montant arrière (7), de sorte que le coulissement du bras poussoir (14) par rapport au montant avant (10) sur lequel il est monté, entraîne le pivotement du montant arrière (7) par rapport au montant avant (10) chaque barre de liaison (6) présentant une portion d'extrémité (6A) s'étendant au-delà du montant arrière (7) ;
**caracterisé en ce que**:
- chaque système de support (2) de roue arrière (3) est monté coulissant par rapport au montant arrière (7) ; et
- **en ce que** le châssis (1) comprend deux pièces de traction (8), chaque pièce de traction étant articulée par rapport à ladite portion d'extrémité (6A) et audit système de support (2), de sorte que le pivotement du montant arrière (7) par rapport au montant avant (10) entraîne le coulissement du système de support (2) par rapport au montant arrière (7).

2. Châssis pliant selon la revendication 1, dans lequel ledit système de support (2) est un système de suspension.

3. Châssis pliant selon la revendication 1 ou 2, dans lequel ladite pièce de traction (8) est une entretoise.

4. Châssis pliant selon l'une quelconque des revendications 1 à 3, dans lequel ladite pièce de traction (8) est une tige rigide.

5. Châssis pliant selon l'une quelconque des revendications 1 à 4, comprenant, en outre, au moins une poignée de guidage (18) coopérant avec lesdits bras poussoirs (14).

6. Châssis pliant selon revendication 5, dans lequel ladite poignée de guidage (18) est une barre de guidage qui relie les bras poussoirs (14) entre eux et qui est articulée par rapport aux bras poussoirs, de manière à pouvoir être basculée en direction des roues arrières (3) dans la position repliée du châssis.

7. Voiture d'enfant comprenant un châssis pliant (1) selon l'une quelconque des revendications 1 à 6.

## Claims

1. A folding chassis for a child pushchair, comprising:
- two front posts (10), each front post having a front wheel (4) at the lower end thereof;
- two back posts (7), each back post having a back wheel (3) at the lower end thereof, said back wheel being mounted on a support system (2), which in turn is mounted on the back post, these two back posts (7) respectively being articulated relative to the two front posts (10);
- two pushing arms (14) respectively slidingly mounted relative to the two front posts (10);
- two connecting bars (6), each connecting bar being articulated relative to a pushing arm (14) and a back post (7), so that the sliding of the pushing arm (14) relative to the front post (10) on which it is mounted drives the pivoting of the back post (7) relative to the front post (10), each connecting bar (6) having an end portion (6A) extending past the back post (7);
**characterized in that**
- each back wheel (3) support system (2) is slidingly mounted relative to the back post (7); and
- **in that** the chassis (1) comprises two traction pieces (8), each traction piece being articulated relative to said end portion (6A) and said support system (2), so that the pivoting of the back post (7) relative to the front post (10) drives the sliding of the support system (2) relative to the back post (7).

2. The folding chassis according to claim 1, wherein said support system (2) is a suspension system.

3. The folding chassis according to claim 1 or 2, wherein said traction piece (8) is a crosspiece.

4. The folding chassis according to any one of claims 1 to 3, wherein said traction piece (8) is a rigid rod.

5. The folding chassis according to any one of claims 1 to 4, also comprising at least one guide handle (18) cooperating with said pushing arms (14).

6. The folding chassis according to claim 5, wherein said guide handle (18) is a guide bar that connects the pushing arms (14) to one another and is articulated relative to the pushing arms, so as to be able to be tilted toward the back wheels (3) in the folded position of the chassis.

7. A child's pushchair, comprising a folding chassis (1) according to any one of claims 1 to 6.

## Patentansprüche

1. Zusammenklappbares Fahrgestell für einen Kinderwagen, umfassend:
- zwei vordere Säulen (10), wobei jede Säule an ihrem unteren Ende ein Vorderrad (4) trägt,
- zwei hintere Säulen (7), wobei jede hintere Säule an ihrem unteren Ende ein Hinterrad (3) trägt, wobei dieses Hinterrad auf einem Stützsystem (2) montiert ist, das selbst auf der hinteren Säule befestigt ist, wobei diese beiden hinteren Säulen (7) in bezug zu den vorderen Säulen (10) gelenkig angeordnet sind;
- zwei Schubarme (14), die jeweils gleitend in bezug zu den beiden vorderen Säulen (10) angeordnet sind,
- zwei Verbindungsstangen (6), wobei jede Verbindungsstange in bezug zu einem Schubarm (14) und einer hinteren Säule (7) gelenkig angeordnet ist, so daß das Gleiten des Schubarms (14) in bezug zur vorderen Säule (10), auf der er montiert ist, das Schwenken der hinteren Säule (7) in bezug zur vorderen Säule (10) nach sich zieht,
- wobei jeder Verbindungsarm (6) einen Endabschnitt (6A) aufweist, der sich über die hintere Säule (7) hinaus erstreckt,
**dadurch gekennzeichnet, daß**
- jedes Stützsystem (2) eines Hinterrades (3) gleitend in bezug zur hinteren Säule (7) montiert ist, und
- daß das Gestell (1) zwei Zugteile (8) umfasst, wobei jeder Zugteil in bezug zum Endabschnitt (6A) und zum Stützsystem (2) gelenkig angeordnet ist, so daß das Schwenken der hinteren Säule (7) in bezug zur vorderen Säule (10) zum Gleiten des Stützsystems (2) in bezug zur hinteren Säule (7) führt.

2. Zusammenklappbares Gestell nach Anspruch 1, bei dem das Stützsystem (2) ein Aufhängungssystem ist.

3. Zusammenklappbares Gestell nach Anspruch 1 oder 2, bei dem der Zugteil (8) eine Querstrebe ist.

4. Zusammenklappbares Gestell nach einem der Ansprüche 1 bis 3, bei dem der Zugteil (8) eine starre Stange ist.

5. Zusammenklappbares Gestell nach einem der Ansprüche 1 bis 4, ferner umfassend mindestens einen Führungsgriff (18), der mit den Schubarmen (14) zusammenwirkt.

6. Zusammenklappbares Gestell nach Anspruch 5, bei dem der Führungsgriff (18) eine Führungsstange ist, die die Schubarme (14) miteinander verbindet und in bezug zu den Schubarmen gelenkig angeordnet ist, um in Richtung der Hinterräder (3) in eine zusammengeklappte Position des Gestells gekippt zu werden.

7. Kinderwagen, umfassend ein zusammenklappbares Fahrgestell (1) nach einem der Ansprüche 1 bis 6.
